# EUROPEAN PATENT APPLICATION

(11) **EP 2 077 441 A2**
(43) Date of publication of application: **08.07.2009**
(21) Application number: 09000005.0
(22) Date of filing: 02.01.2009
(51) Int. Cl.: G01K 11/12, G01K 1/14

(54) **Thermometer material**

(30) Priority: 04.01.2008 US 10101 P; 22.02.2008 US 66777 P; 09.05.2008 US 127007 P
(71) Applicant: White Box Inc., Stamford, Connecticut 06907 (US)
(72) Inventor: Hollander, Milton Bernard, Stamford, CT 06903 (US)
(74) Representative: Steil, Christian

(57) **Abstract**

Sheet material responsive to temperature is applied to a surface from which local regions of variable temperature are to be determined. Lengths of flexible ribbon or tape or sheets of temperature responsive flexible film or foil are derived from a continuous roll of elongated sheet material or separated from larger foils of thermal sheets by cutting, by tearing or by breaking perforations therein.

## Description

The present invention relates to a thermometer sheet material and to a method for temperature measurement using such sheet material.

It is known in the prior art to adhere separate thermoindicator labels to structures to identify their surface temperature. Known labels may include discrete spots, which change in appearance at different pre-selected temperatures.

Thermocouple wire pairs are known to measure temperature by generation of electric current between dissimilar metal wires.

It is the object of the invention to provide an improved thermometer sheet material and an improved method for measuring temperature.

The above object is achieved by an article of manufacture for indication of surface temperature according to claim 1 and by a method of displaying temperature variation across a surface according to claim 13.

The invention relates in general to methods of temperature measurement, temperature testing and display and to articles of manufacture in the structural form of temperature indicating sheet material to be applied to a thermal test surface, methods of manufacture and of shipping or storing the sheet material are disclosed, and methods of application and use of this article of manufacture are also described herein.

Sheet material responsive to temperature is applied to a surface from which local regions of variable temperature are to be determined. Lengths of flexible ribbon or tape or sheets of temperature responsive flexible film or foil are derived from a continuous roll of elongated sheet material or separated from larger foils of thermal sheets by cutting, by tearing or by breaking perforations therein.

The article of manufacture constructed in layers, comprises: (a) an adhesive inner under-surface layer carried on (b) a supporting core of sheet material which is applied to the test structure surface to indicate by a line or train of temperature responsive changeable inherent marking displays, upon or within the sheet structure, the transition profile of surface temperature across or over the distance covered on the structure surface by the selected sheet area and/or length. The product is preferably a non-reversible (one sided) thermal ribbon.

The device captures temperature information in a continuous or extended run, as opposed to a local spot product or label, and profiles temp4erfature distribution over a surface. The product is susceptible to marketing by lengths from a spool or roll or from a large trim able sheet dispensed from a magazine.

Preferably a series of two to twelve axially longitudinal and transversely spaced apart side by side parallel, preferably continuous (c) temperature range linear markings (which may alternatively be displayed as spots) within or upon a tape structure change in appearance, such as change in hue or color, over different surface thermal ranges and are visible from the non-adhesive outer side of said tape or sheet remote from the measurement surface. Change in appearance may be a darkening of an indicator line, or separate lines may change in color according to temperature range. A single indicator line may be used, but plural and parallel lines in clusters of marking are preferred.

A protective layer over the indicator may melt away at a chosen temperature to reveal a printed temperature value. The product provides a photographable record by still or video recording of dynamic temperature changes over time and/or over distance along a surface.

In another version multiple wires, strands or trips of foil within a tape or sheet sandwich form a thermocouple, which indicate local temperature of the surface.

In other words, Sheet material responsive to temperature is applied to a surface from which local regions of variable temperature are to be determined. Lengths of flexible ribbon or tape or sheets of temperature responsive flexible film or foil are derived from a continuous roll of elongated sheet material or separated from larger foils of thermal sheets by cutting, by tearing or by breaking perforations therein.

The present invention in general is directed to continuous elongated temperature indication sheet material, tape or to a ribbon of flexible sheet material which, when unrolled and positioned in contact with the surface of a structure to be monitored, visibly indicates by change of appearance local structural surface temperature and temperature inflexion points. The temperature display preferably is an arrangement along the axis of the ribbon of parallel axially aligned and transversely spaced a markings indicating temperature in a pattern, which may be intermittent or broken and which indicate a visible profile of temperature over a selectable distance across or along the surface of a structure. The invention provides a two dimensional display of temperature variation as a visible pattern over a length of indicator ribbon. Each line may separately indicate a specific temperature or temperature range. The sheet or tape has imprinted thereupon or within, temperature sensitive particles, such as ink or paint. A protective layer or coating over the sheet core on the non-adhesive side may be transparent to reveal underlying surface temperature indications on the core sheet layer.

In a preferred example of the best known mode of practicing this invention, a continuous roll of flexible tape applied to a measurement surface is first coated on an inner under surface with a layer a contact or pressure adhesive and is imprinted to show from its opposite outer non-contact surface, multiple parallel spaced apart visible lines of temperature sensitive material, which in response to differential surface temperature provide a profile of temperature, and indicate changes in a display pattern responsive at/to different pre-selected temperatures or temperature ranges, detected from under the tape in contact with the measurement surface, by change of tape appearance.

A single indicator line may also be used. Temperature indication lines on the ribbon may be longitudinal or transverse. In special cases, such as curved surfaces, the lines form a curved, circular or spiral pattern on the sheet. The tape may also display different text messages or a range of temperature values expressed in visible numerical display characters at intervals over the sheet surface according to temperature response.

Another version of the invention comprises strands of metal wire, such as filaments or foil strips of metal such as chrome-alumal, gold or platinum, in/on the tape which function as a thermocouple and may be part of a set of multiple redundant pairs from which an appropriate pair is selected by the user and after peeling back the tape to expose a select length of wire or foil and then attached to a thermocouple connector.

### DRAWING

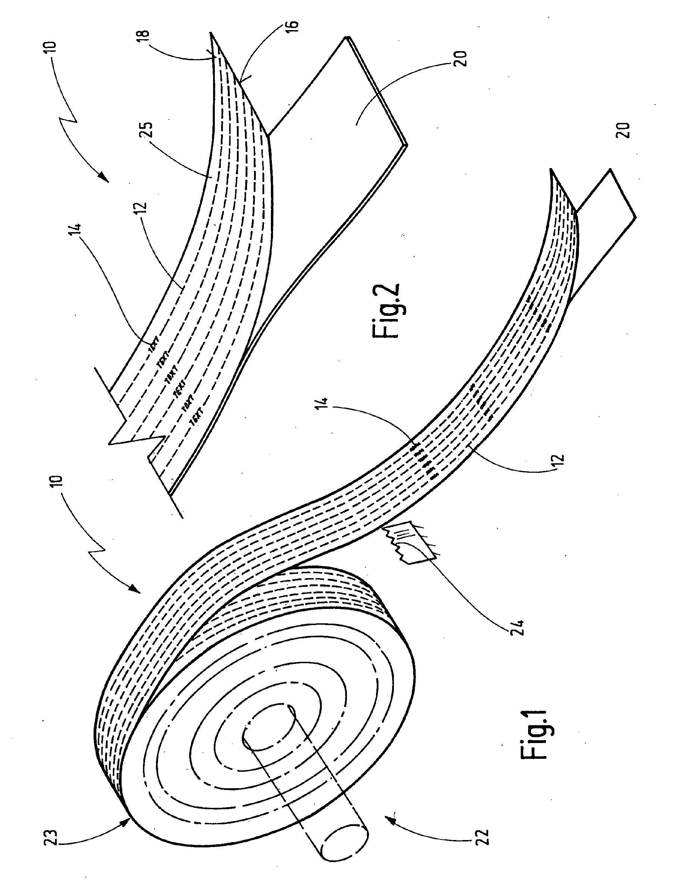

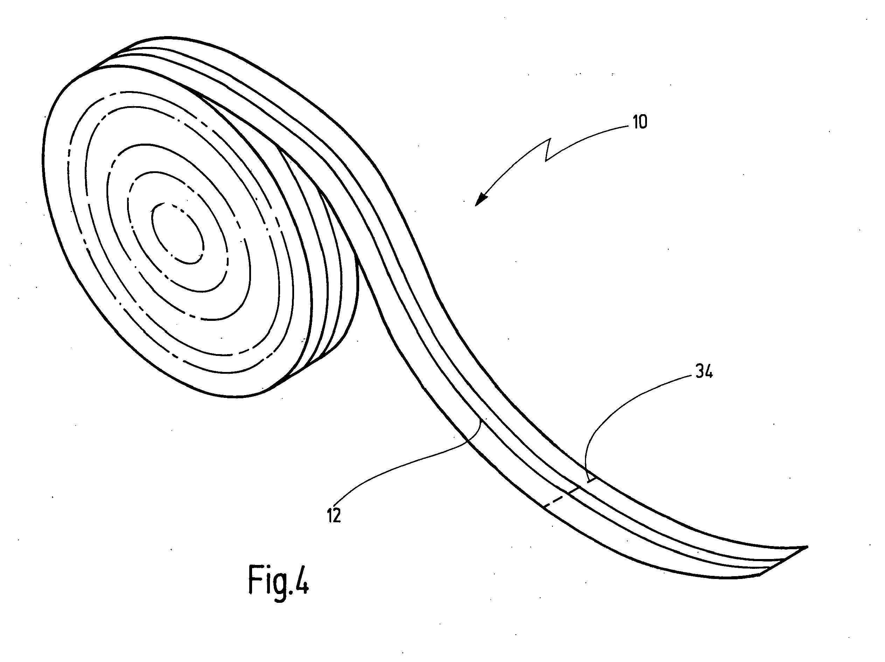

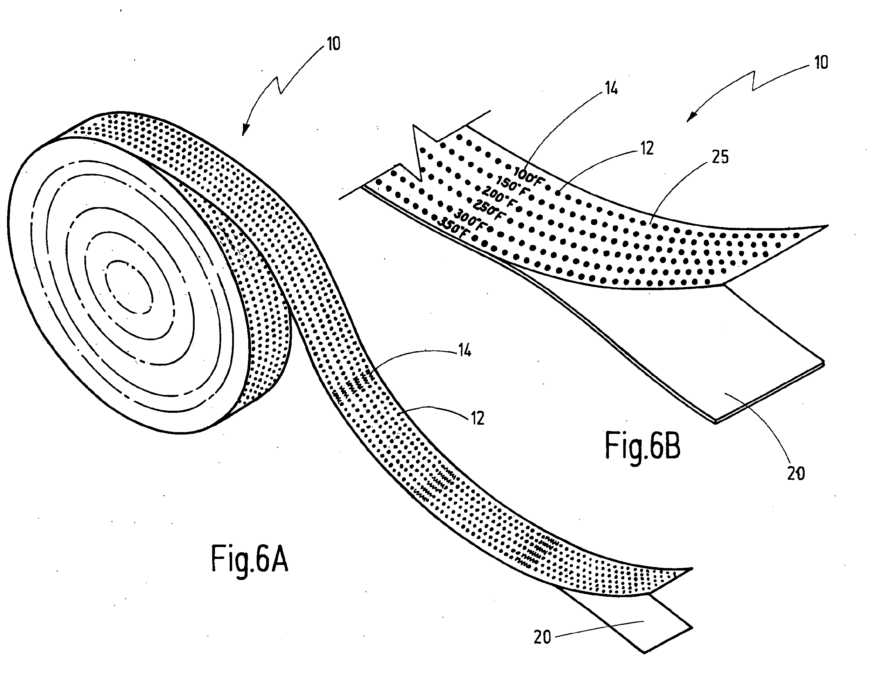

The attached Drawing shows in Seven Figures views of thermal sheet, tape or ribbon to be used as a thermometer when adhered to a measurement surface.
FIGURE 1 shows the tape 10 partially unwound from a spool 23.
FIGURE 2 is an enlarged fragment of Figure 1.

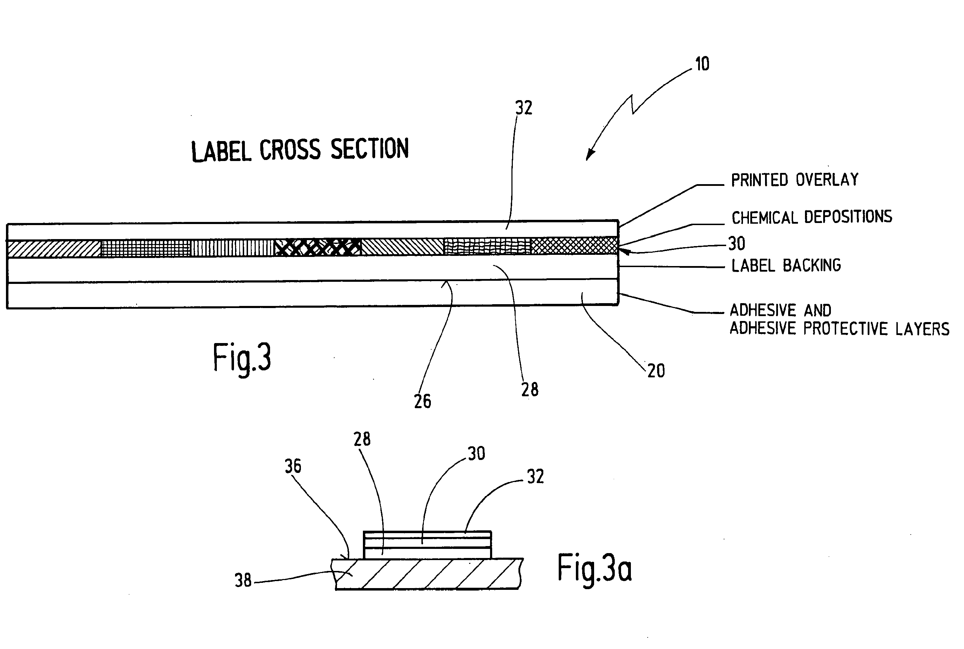

FIGURE 3 is a label cross section showing diagrammatically the arrangement of printed overlay 32, chemical deposits 30, label backing 28, an adhesive 26 and adhesive protective layer 20.
FIGURE 4 shows a partially unwound length of thermal indicator sheet material 10 in tape form.

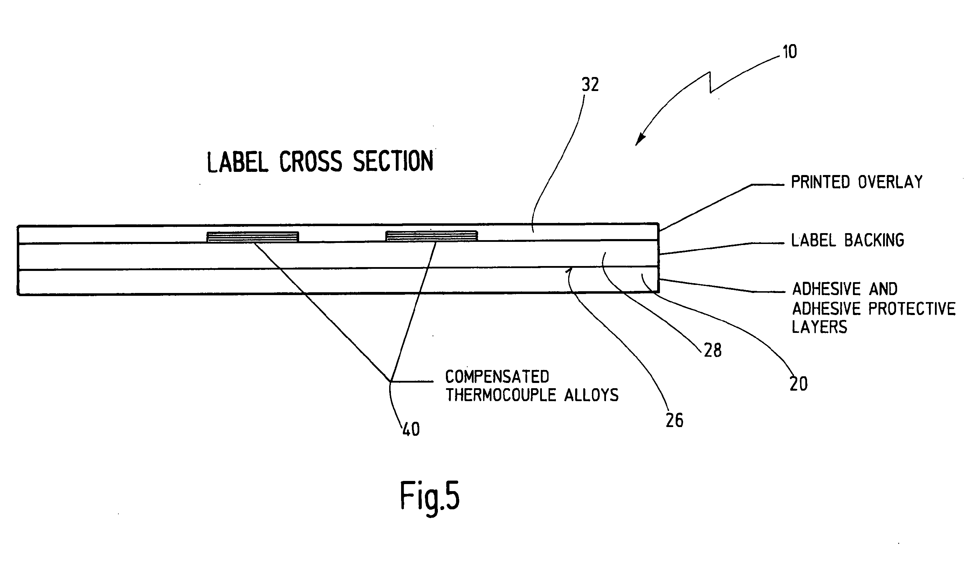

FIGURE 5 is a diagrammatic label cross section showing incorporated compensated thermocouple alloys 40, printed overlay 32, label backing 28, adhesive 26 and adhesive protection layer 20.
FIGURE 6A is a perspective view of a spool 23 of thermal tape having thereupon a pattern of sensitive spots 12, 14 which change to indicate temperatures, which may be displayed in Arabic numerals 14.
FIGURE 6B shows the layered structure of the article of Figure 6A, peeled apart to form individual labels 25 and showing enlarged detail of a sensitive spot indicator pattern 12, 14 which can also be in broken or continuous lines. Each spot represents a different temperature and in any case temperature display is two dimensional.
The tape 10 has visible elongated linear temperature responsive indication markings 12, which, although seen in this Fig. 4 as continuous lines may be interrupted displays, broken lines (Fig. 1 and 2) or serial spots (Fig. 6) and may include script, symbols or text warnings 14, for example in different colors. The inner under-surface layer 16 of the multi-layer flexible tape 10 is provided with means 26 to attach it to a measurement surface, such as by pressure or contact adhesive. Adhesive 26 may be applied only to the measurement surface or to both tape and substrate. A disposable adhesive protection film 20 or peel away sheet may be disposed between the adhesive layer 26 and the upper surface 18. The tape may be coated in situ with clear plastic spray for mechanical protection and/or to secure the product to a surface by overspray.

The tape is supplied from a dispenser 22 which may include an integral serrated tear edge 24 for dispensing selectable lengths and widths from spools or reels of different size, wide or capacity and are provided in a range of colors according to intended use. Separate sheets 10 or leaves each include a pattern of temperature responsive lines 12, arranged to indicate different surface temperatures by change in appearance perceived through the sheet structure to indicate transition of temperature of the surface 36 under the sheet 10.

The tape 10 is optionally provided with regions of weakened transverse tear lines 34, such as serial perforation used in postage stamps. The sheet \or tape 10 is easily cut to size by the user to fit different areas of measurement.

A preferred method of temperature measurement and display includes steps of: cutting or tearing a measured length of tape strip 10 from the spool to form a thermometer, exposing the adhesive surface 16, 26 on the underside of the ribbon 10, placing and adhering the tape strip on the measurement surface 36 and observing the temperature display indication along the length of the strip of cut tape 10.

## Claims

1. An article of manufacture for indication of surface temperature comprising as a thermometer an elongated, continuous strip, ribbon or tape formed from multi-layer sheet material which is to be applied to a measurement surface and which changes over distance as an indication of surface temperature and provides a two-dimensional indication of a surface temperature profile.

2. The article of manufacture according to claim 1, wherein the multi-layer sheet material comprises an adhesive inner under-surface layer carried on a supporting core of sheet material which is to be applied to the measurement surface.

3. The article of manufacture according to claim 1 or 2, wherein the multi-layer sheet material comprises temperature range linear markings within or upon the multi-layer sheet material, which change in appearance over different surface thermal ranges and are visible from an outer side of the sheet material.

4. The article of manufacture according to any of claims 1 to 3, wherein the sheet material is provided with regions of weakened transverse tear lines.

5. The article of manufacture according to any of claims 1 to 4, wherein the multi-layer sheet material comprises at least one indicator line which is oriented longitudinally or transversely with respect to a longitudinal axis of the tape.

6. The article of manufacture according to claim 5, wherein multiple indicator lines are arranged transversely or longitudinally with respect to the longitudinal axis of the tape.

7. The article of manufacture according to claim 6, wherein each of the indication lines is adapted to indicate a different temperature or temperature range.

8. The article of manufacture according to any of claims 1 to 7, wherein a protective transparent layer is provided above temperature indication zones of the sheet material.

9. The article of manufacture according to any of claims 1 to 8, wherein the tape displays different alphanumerical display characters according to the respective temperature range to be indicated.

10. The article of manufacture according to any of claims 1 to 9, wherein the sheet material has imprinted thereupon or within temperature-sensitive particles such as ink or paint.

11. The article of manufacture according to any of claims 1 to 10, wherein the multi-layer sheet material comprises an adhesive protection film disposed between an adhesive layer and a display surface of the sheet material, if the sheet material is rolled to provide a reel.

12. The article of manufacture according to any of claims 1 to 11, wherein multiple wires, strands or strips of foils within the sheet material form a thermocouple.

13. A method of displaying temperature variation across a surface, including the step of applying a layer of sheet material upon said surface, which changes in appearance according to changes in surface temperature.

14. The method of claim 13, wherein the sheet material is at least a part of the article of manufacture according to any of claims 1 to 12.
